## Europäisches Patentamt

## European Patent Office

## Office européen des brevets

(11) Veröffentlichungsnummer: **0 152 054**
**B1**

(12)

# EUROPÄISCHE PATENTSCHRIFT

(45) Veröffentlichungstag der Patentschrift:
29.06.88

(51) Int. Cl.⁴: **G 01 G 3/14**

(21) Anmeldenummer: **85101196.5**

(22) Anmeldetag: **06.02.85**

(54) Elektromechanische Wägezelle mit Biegemesskörper.

<table>
<tr><td>

(30) Priorität: **11.02.84 DE 3404936**

(43) Veröffentlichungstag der Anmeldung:
**21.08.85 Patentblatt 85/34**

(45) Bekanntmachung des Hinweises auf die Patenterteilung:
**29.06.88 Patentblatt 88/26**

(84) Benannte Vertragsstaaten:
**AT BE CH DE FR GB IT LI NL SE**

(56) Entgegenhaltungen:
**EP-A-0 018 013**
**EP-A-0 053 337**
**EP-A-0 067 665**
**US-A-4 299 130**

</td><td>

(73) Patentinhaber: **Bizerba- Werke Wilhelm Kraut GmbH & Co. KG., Wilhelm- Kraut- Strasse 41, D-7460 Balingen 1 (DE)**

(72) Erfinder: **Jetter, Hans, Dr.- Ing., Sonnenbergstrasse 54, D-7460 Balingen 1 (DE)**

(74) Vertreter: **Hoeger, Stellrecht & Partner, Uhlandstrasse 14c, D-7000 Stuttgart 1 (DE)**

</td></tr>
</table>

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine elektromechanische Wägezelle mit Biegemeßkörper und einseitig auf diesem angeordneten, zu einer Brücke zusammengeschalteten Dehnungsmeßstreifen sowie mit Abgleichwiderständen, nämlich einem ersten Abgleichwiderstand für die Einstellung des Nullpunktes der Brücke, einem zweiten Abgleichwiderstand für die Konstanthaltung des Nullpunktes bei sich ändernder Temperatur und einem dritten Abgleichwiderstand für die Temperaturkompensation des Meßsignals der Brücke, wobei die Dehnungsmeßstreifen und der erste Abgleichwiderstand zusammen mit ihren elektrischen Anschlußpunkten an einer ersten gemeinsamen Trägerfolie angeordnet sind.

Bei bekannten Wägezellen dieser Art bestehen die Dehnungsmeßstreifen und der erste Abgleichwiderstand für die Einstellung des Nullpunkts der Brücke aus dem gleichen, elektrisch leitenden Material, das seinerseits eine möglichst geringe Temperaturabhängigkeit des elektrischen Widerstands zeigen soll. In Frage kommen hierfür beispielsweise die Legierungen Konstantan, Manganin oder Karma, die nach Art gedruckter Schaltungen auf einer Trägerfolie aus Polyimid angeordnet sein können. Bei den bekannten Wägezellen (Zeitschrift "Wägen + Dosieren" 1983, 42) sind lediglich die Dehnungsmeßstreifen und ein oder mehrere Abgleichwiderstände für die Einstellung des Nullpunkts der Brücke auf einer Trägerfolie angeordnet, die auf dem Biegemeßkörper aufgeklebt und mit einer ebenfalls aufgeklebten metallischen Schutzfolie abgedeckt ist. Die beiden anderen, der Temperaturkompensation dienenden Abgleichwiderstande müssen hingegen extern, also außerhalb der Abdeckung, am Biegemeßkörper nachträglich angebracht werden. Dabei liegen die Temperaturabgleichwiderstände naturgemäß in erheblicher Entfernung von den Dehnungsmeßstreifen, so daß wegen örtlich unterschiedlicher Temperaturen die Temperaturkompensation nicht präzise ist. Außerdem ist die in mehreren Schritten erfolgende Fertigung solcher Wägezellen mit externen Abgleichwiderständen kompliziert. Insbesondere können beim Anlöten der externen Temperaturabgleichwiderstände Kontaktwiderstände auftreten, die den präzisen Abgleich weiterhin erschweren. Schließlich ergeben sich lange Leiterwege innerhalb der Brückenschaltung, die das Meßverhalten der Brücke beeinflussen können, wobei insbesondere sich kreuzende oder an den Dehnungsmeßstreifen am Biegemeßkörper vorbei geführte Leitungsabschnitte stören.

Es ist Aufgabe der Erfindung, die bei bekannten Wägezellen mit der externen Anordnung der Temperaturabgleichwiderstände verbundenen Mängel zu beseitigen und hierdurch eine Meßanordnung zu schaffen, die bei höchster Genauigkeit leicht zu fertigen und einfach sowie präzise abzugleichen ist.

Die Aufgabe wird erfindungsgemäß dadurch gelöst, daß die zweiten und dritten Abgleichwiderstände zusammen mit ihren elektrischen Anschlußpunkten auf einer zweiten gemeinsamen Trägerfolie angeordnet sind, daß die Anschlußpunkte auf den ersten und zweiten Folien geometrisch so angeordnet sind, daß sie direkt elektrisch leitend miteinander verbindbar sind, und daß die Verbindung der beiden Folien an den Anschlußpunkten derart vorgenommen ist, daß die drei Abgleichwiderstände zum Zwecke des Abgleichs frei zugänglich sind.

Die nachstehende Beschreibung einer bevorzugten Ausführungsform der Erfindung dient im Zusammenhang mit beiliegender Zeichnung der weiteren Erläuterung. Es zeigen:

Fig. 1    halbschematisch eine aufgebrochene Seitenansicht einer elektromechanischen Wägezelle;

Fig. 2    eine Brückenschaltung der Wägezelle aus Fig. 1;

Fig. 3    eine erste Trägerfolie mit Dehnungsmeßstreifen und Abgleichwiderständen für die Einstellung des Nullpunktes der Brücke;

Fig. 4    eine zweite Trägerfolie mit Temperaturabgleichwiderständen und

Fig. 5    die miteinander verbundenen Trägerfolien aus Fig. 3 und 4.

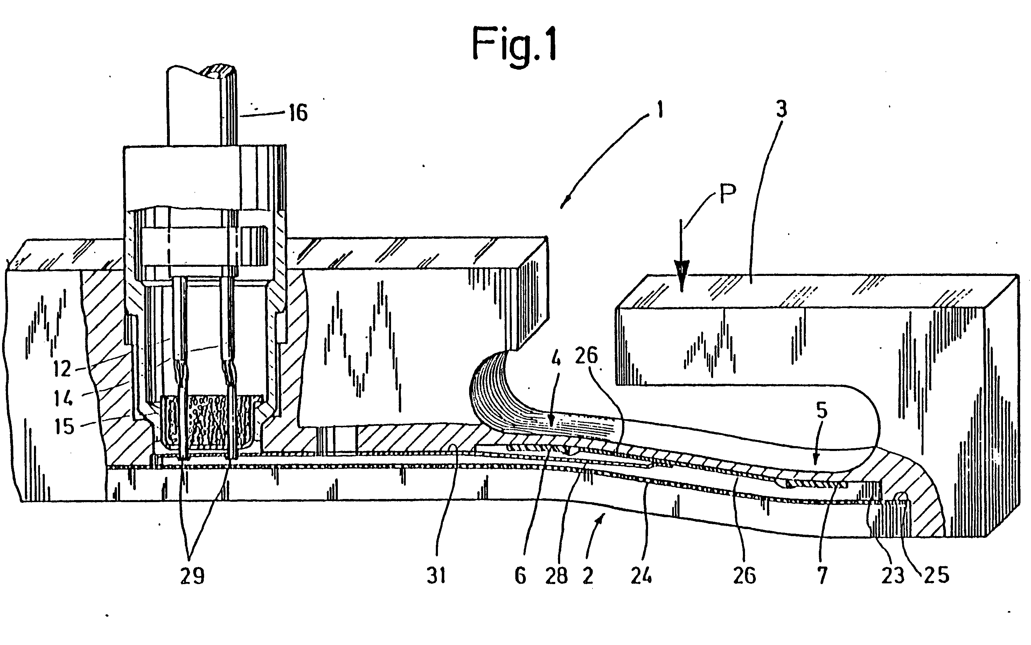

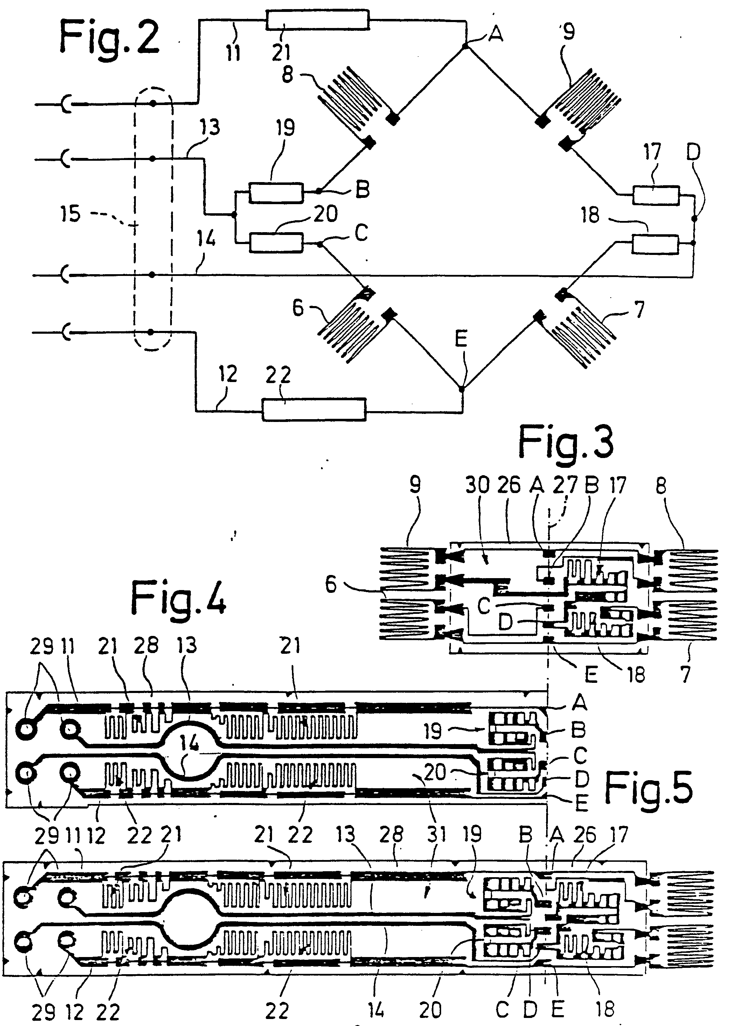

Fig. 1 zeigt halbschematisch eine herkömmliche elektromechanische Wägezelle 1 mit Biegemeßkörper 2, an dessen sogenanntem "Rücksprungarm" 3 die zu messende Wägekraft P angreift. Durch die Wägekraft wird der unterhalb des Rücksprungsarms 3 gelegene Bereich des Biegemeßkörpers 2 in an sich bekannter Weise an der Stelle 4 gedehnt und an der Stelle 5 gestaucht. Diese Deformationen werden durch Dehnungsmeßstreifen 6, 7, welche an den Stellen 4 bzw. 5 z. B. durch Klebung befestigt sind, aufgenommen. Die Dehnungsmeßstreifen sind zu einer Meßbrücke zusammengeschaltet, die in Fig. 2 dargestellt ist. Die Brücke enthält außer den erwähnten Dehnungsmeßstreifen 6 und 7 noch zwei weitere Dehnungsmeßstreifen 8, 9, die in Fig. 1 nicht sichtbar sind. Die Speiseleitungen 11, 12 der Brücke sowie die Meßleitungen 13, 14 sind über eine Glasdurchführung 15 aus dem Biegekörper 2 her ausgeführt und zu einem gemeinsamen Speise- und Meßkabel 16 zusammengefaßt.

Wie aus Fig. 2 hervorgeht, sind in den die Dehnungsmeßstreifen 7, 9 enthaltenden Brückenzweigen Abgleichwiderstände 17, 18 für die Einstellung des Nullpunktes der Brücke angeordnet. Die Brückenzweige mit den Dehnungsmeßstreifen 6 und 8 enthalten Abgleichwiderstände 19, 20 für die Konstanthaltung des Nullpunktes bei sich ändernder Temperatur. Schließlich liegen in den beiden Speiseleitungen 11, 12 weitere Abgleichwiderstände 21, 22 für die Temperaturkompensation des Meßsignals der Brücke.

Wie Fig. 1 zeigt, sind die Dehnungsmeßstreifen 6, 7 in einer Aussparung 23 an der Unterseite des Biegemeßkörpers 2, und zwar am Boden dieser Aussparung angeordnet. Dasselbe gilt auch für die in Fig. 1 nicht sichtbaren Dehnungsmeßstreifen 8, 9. Weiterhin enthält die längliche Aussparung 23 in noch zu erläuternder Weise auch die erwähnten Abgleichwiderstände 17 bis 22. Die Dehnungsmeßstreifen und Abgleichwiderstände sind in der Aussparung 23 dadurch hermetisch dicht eingekapselt, daß die Aussparung durch eine Metallfolie 24 verschlossen ist. Die Metallfolie 24 ist dabei an einer die Aussparung 23 rings umgebenden Schulter 25 abdichtend befestigt.

Wie aus Fig. 3 hervorgeht, bestehen die Abgleichwiderstände 17, 18 in an sich bekannter Weise aus mäanderartig geführten Leitungsbahnen, welche durch auf trennbare Verbindungsleitungen kurzgeschlossen sind. Durch Auftrennen bestimmter Verbindungsleitungen werden die Kurzschlüsse aufgehoben, so daß in an sich bekannter Weise der Abgleichwiderstand auf einen bestimmten Wert eingestellt und hierdurch der Abgleich durchgeführt werden kann. Die Leiterbahnen der Abgleichwiderstände 17, 18, die aus einem Metall mit möglichst geringer Temperaturabhängigkeit seines Widerstands bestehen, z. B. aus Konstantan, sind nach Art einer gedruckten Schaltung auf eine isolierende Trägerfolie 26 aus Kunststoff, vorzugsweise aus Polyimid, aufgebracht. Die Trägerfolie 26 weist weiterhin insgesamt acht Anschlußstellen für die Dehnungsmeßstreifen 6, 7, 8 und 9 auf. An diesen Anschlußstellen sind die Dehnungsmeßstreifen angelötet oder angeschweißt. Bei der in Fig. 3 dargestellten Ausführungsform sind die Dehnungsmeßstreifen nicht auf der Trägerfolie 26 angeordnet, sondern mit dieser lediglich über die Verlötung an den Anschlußstellen verbunden. Somit können die Dehnungsmeßstreifen direkt am Boden der Aussparung 23 (Fig. 1) befestigt werden. Bei einer anderen Ausführungsform können die Dehnungsmeßstreifen 6, 7, 8, 9 ebenfalls auf der Trägerfolie 26 ausgebildet sein.

Die Trägerfolie 26 trägt weiterhin elektrische Anschlußpunkte A, B, C, D und E, die auch in das Schaltbild der Fig. 2 eingezeichnet sind. Schließlich trägt die Trägerfolie 26 in der aus Fig. 2 und 3 ersichtlichen Weise Leiterbahnen, welche die einzelnen Schaltelemente der Brücke miteinander verbinden.

Wie in Fig. 3 dargestellt, liegen die fünf Anschlußpunkte A, B, C, D, E auf der Trägerfolie 26 nebeneinander auf einer geraden Linie 27.

Auf einer weiteren Trägerfolie 28 - vgl. Fig. 4 -, z. B. ebenfalls aus Polyimid, sind die Temperaturabgleichwiderstände 19, 20 sowie 21, 22 angeordnet, die ebenso wie die Abgleichwiderstände 17, 18 in Fig. 3 ausgebildet sind, also durchtrennbare Kurzschlußbahnen aufweisen, so daß sie zum Zwecke des Abgleichs auf bestimmte Widerstandswerte eingestellt werden können, sobald bestimmte Kurzschlußbahnen durchtrennt sind. Die Temperaturabgleichwiderstände 19, 20, 21 und 22 bestehen im Gegensatz zu den Abgleichwiderständen 17, 18 auf der Trägerfolie 26 (Fig. 3) aus einem elektrisch leitenden Material mit möglichst ausgeprägtem Temperaturgang des elektrischen Widerstandes, beispielsweise aus reinem Nickel oder Balco. Die mit den Temperaturabgleichwiderständen 19, 20, 21, 22 verbundenen Leiterbahnen führen zu ringförmigen Anschlußstellen 29, an welche - vgl. Fig. 1 - die Leitungen 11, 12, 13 und 14 angelötet werden. Schließlich weist auch die Trägerfolie 28 mit entsprechenden Leiterbahnen verbundene Anschlußpunkte A, B, C, D, E auf, die ebenfalls nebeneinander auf einer geraden Linie liegen und den gleichen Abstand voneinander wie die Anschlußpunkte A, B, C, D, E haben. Somit können diese Anschlußpunkte auf den jeweiligen Trägerfolien 26 bzw. 28 z. B. durch Verlöten leicht miteinander verbunden werden. Dieser Zustand ist in Fig. 5 dargestellt. Die Trägerfolie 28 überdeckt dabei teilweise die Trägerfolie 26 und die Dehnungsmeßstreifen 6, 9, wobei die Temperaturabgleichwiderstände 19, 20 auf der Trägerfolie 28 über einem im wesentlichen freien Flächenbereich der Trägerfolie 26 liegen, der keine Abgleichwiderstände oder Dehnungsmeßstreifen trägt. Dieser Flächenbereich ist in Fig. 3 mit dem Bezugszeichen 30 versehen.

Wie aus Fig. 1 hervorgeht, verläuft die Trägerfolie 28 in geringem Abstand oberhalb der Trägerfolie 26 und der Dehnungsmeßstreifen 6 (und 9). Zu diesem Zwecke weist die Aussparung 23 in dem in Fig. 1 links gelegenen Bereich eine Stufe 31 auf, auf welcher der zu den ringförmigen Anschlußstellen 29 hin führende Teil der Trägerfolie 28 aufliegt. Die Folie 28 ist dabei gespannt, so daß sie die Folie 26 und insbesondere die Dehnungsmeßstreifen 6 und 9 berührungsfrei überdeckt. Auf diese Weise gibt es in der gesamten am Biegemeßkörper 2 realisierten Schaltung der Meßbrücke keinerlei einander kreuzende oder im Bereich der Dehnungsmeßstreifen vorbeigeführte Leitungsbahnen, welche das Meßergebnis stören könnten. Weiterhin liegen alle Abgleichwiderstände 17 bis 22 in der Aussparung 23 des Biegemeßkörpers 2 frei zutage, so daß sie in der üblichen Weise abgeglichen werden können. Nach erfolgtem Abgleich wird die ganze Brückenschaltung einschließlich der Abgleichwiderstände mit Hilfe der Metallfolie 24 hermetisch dicht gekapselt.

Bei alledem liegen die Abgleichwiderstände 19, 20 für die Konstanthaltung des Nullpunktes bei sich ändernder Temperatur ausreichend nahe an den Dehnungsmeßstreifen 6, 7, 8 und 9, so daß sie im wesentlichen die gleiche Temperatur wie diese annehmen und Temperaturschwankungen kompensieren.

Wie weiterhin aus Fig. 4 und 5 hervorgeht, liegt zwischen den Temperaturabgleichwiderständen 19, 20 einerseits und 21, 22 andererseits ebenfalls ein freier Flächenbereich 31, der nach der Verbindung der Trägerfolien 26, 28 an den Anschlußpunkten A bis E über den Dehnungsmeßstreifen 6, 9 zu liegen kommt. Auf diese Weise können wegen der freien Flächenbereiche 30, 31 auf den Trägerfolien 26 bzw. 28 beim Durchtrennen der Kurzschlußleiterbahnen der Abgleichwiderstände 19, 20 und 21, 22 keine Dehnungsmeßstreifen beschädigt werden. Die den Abgleichwiderstand für die Temperaturkompensation des Meßsignals der Brücke bildenden Teilwiderstände 21, 22 liegen zueinander symmetrisch in den Speiseleitungen 11, 12 (Fig. 4 und 5).

Es ist zu beachten, daß die Anordnung gemäß Fig. 3 noch keine voll funktionsfähige Brückenschaltung darstellt. Erst durch die Verbindung der Trägerfolie 28 mit der Trägerfolie 26 an den Anschlußpunkten A bis E entsteht die voll funktionsfähige Meßbrücke, deren Schaltbild in Fig. 2 dargestellt ist. Die als Temperaturabgleichselement dienende Trägerfolie 28 ist somit gleichzeitig Verbindungselement zwischen der Brückenschaltung und dem äußeren, durch das Kabel 16 (Fig. 1) vermittelten Außenanschluß.

Die Abgleichwiderstände 17 bis 22 sind zum Zwecke ihrer optimalen Ausnutzung vorzugsweise dual abgestuft, wobei nach dem Durchtrennen der Kurzschlußleitungen jeweils duale Stufen zugeschaltet werden können.

Auf der Unterseite der Trägerfolie 26 kann eine dünne Kupferbeschichtung oder Kupferfolie aufgebracht sein, die direkt am Biegemeßkörper 2 anliegt. Über diese Kupferschicht erfolgt durch Wärmeleitung ein Temperaturausgleich zwischen denjenigen Stellen, an denen die Dehnungsmeßstreifen 7, 8 bzw. 6, 9 angeordnet sind, so daß diese immer bei derselben Temperatur sind.

**Patentansprüche**

1. Elektromechanische Wägezelle mit Biegemeßkörper und einseitig auf diesem angeordneten, zu einer Brücke zusammengeschalteten Dehnungsmeßstreifen sowie mit Abgleichwiderständen, nämlich einem ersten Abgleichwiderstand für die Einstellung des Nullpunkts der Brücke, einem zweiten Abgleichwiderstand für die Konstanthaltung des Nullpunktes bei sich ändernder Temperatur und einem dritten Abgleichwiderstand für die Temperaturkompensation des Meßsignals der Brücke, wobei die Dehnungsmeßstreifen und der erste Abgleichwiderstand zusammen mit ihren elektrischen Anschlußpunkten an einer ersten gemeinsamen Trägerfolie angeordnet sind, dadurch gekennzeichnet, daß die zweiten und dritten Abgleichwiderstände (19, 20 bzw. 21, 22) zusammen mit ihren elektrischen Anschlußpunkten (A, B, C, D, E) auf einer zweiten gemeinsamen Trägerfolie (28) angeordnet sind, daß die Anschlußpunkte (A, B, C, D, E) auf den ersten und zweiten Folien (26 bzw. 28) geometrisch so angeordnet sind, daß sie direkt elektrisch leitend miteinander verbindbar sind, und daß die Verbindung der beiden Folien (26, 28) an den Anschlußpunkten derart vorgenommen ist, daß die drei Abgleichwiderstände (17 bis 22) zum Zwecke des Abgleichs frei zugänglich sind.

2. Wägezelle nach Anspruch 1, dadurch gekennzeichnet, daß die beiden Trägerfolien (26, 28) mit darauf angeordneten Dehnungsmeßstreifen (6, 7, 8, 9) und Abgleichwiderständen (17 bis 22) in einer gemeinsamen Kapselung (Metallfolie 24) auf dem Biegemeßkörper (2) angeordnet sind.

3. Wägezelle nach Anspruch 1 oder 2, dadurch gekennzeichnet, daß die Anschlußpunkte (A, B, C, D, E) der Trägerfolien (26, 28) nebeneinander auf einer Linie (27) liegen.

4. Wägezelle nach Anspruch 1, 2 oder 3, dadurch gekennzeichnet, daß die zweite Trägerfolie (28) einen Teil der ersten Trägerfolie (26) und die auf diesem Teil der Folie angeordneten Dehnungsmeßstreifen (6, 9) berührungsfrei überdeckt.

5. Wägezelle nach einem der Ansprüche 1 bis 4, dadurch gekennzeichnet, daß die zweiten und dritten Abgleichwiderstände (19, 20 bzw. 21, 22) auf der zweiten Trägerfolie (28) durch einen freien Flächenbereich (31) voneinander getrennt sind, der bei verbundenen Trägerfolien über Dehnungsmeßstreifen (6, 9) der ersten Trägerfolie (26) liegt, so daß beim Abgleichen der Widerstände (19, 20, 21, 22) die Dehnungsmeßstreifen (6, 9) nicht beschädigt werden.

6. Wägezelle nach einem der voranstehenden Ansprüche, dadurch gekennzeichnet, daß der dritte Abgleichwiderstand aus zwei symmetrisch zueinander in den beiden Speiseleitungen (11, 12) der Brücke angeordneten Teilwiderständen (21, 22) besteht.

7. Wägezelle nach einem der voranstehenden Ansprüche, dadurch gekennzeichnet, daß die Trägerfolien (26, 28) mit den Dehnungsmeßstreifen (6, 7, 8, 9) und den Abgleichwiderständen (17, 18, 19, 20, 21, 22) in einer länglichen Aussparung (23) des Biegemeßkörpers (2) angeordnet sind, die durch eine Metallfolie (24) hermetisch abgedichtet ist.

8. Wägezelle nach einem der voranstehenden Ansprüche, dadurch gekennzeichnet, daß die zweite Trägerfolie (28) gleichzeitig elektrisches Verbindungselement zwischen der Brücke und deren Außenanschluß (15, 16) ist.

## Claims

1. Electromechanical weighing cell with flexutre measuring element and, unilaterally disposed on this latter, strain gauges interconnected to form a bridge, and with balancing resistors, namely a first balancing resistor for adjusting the zero point of the bridge, a second balancing resistor maintaining the zero point constant in the event of fluctuating temperature and a third balancing resistor to compensate for the temperature of the measured signal from the bridge, the strain gauges and the first balancing resistor, together with their electrical connection points, being disposed on a common first carrier foil, characterised in that the second and third balancing resistors (19, 20 or 21, 22), together with their electrical connection points (A, B, C, D, E), are disposed on a second common carrier foil (28) and in that the connection points (A, B, C, D, E) on the first and second foils (26, 28) are so disposed geometrically that they can be connected to each other directly in electrically conductive manner and in that the connection of the two foils (26, 28) at the connection points is so made that the three balancing resistors (19 to 22) are freely accessible for the purpose of balancing.

2. Weighing cell according to Claim 1, characterised in that the two carrier foils (26, 28) with the strain gauges (6, 7, 8, 9) disposed on them and the balancing resistors (17 to 22) are disposed in a common encapsulation (metal foil 24) on the flexure measuring element (2).

3. Weighing cell according to Claim 1 or 2, characterised in that the connection points (A, B, C, D, E) of the carrier foil (26, 28) lie one beside another on one line (27).

4. Weighing cell according to Claim 1, 2 or 3, characterised in that the second carrier foil (28) masks but does not make contact with a part of the first carrier foil (26) and the strain gauges (6, 9) disposed on this part of the foil.

5. Weighing cell according to one of Claims 1 to 4, characterised in that the second and third balancing resistors (19, 20 or 21, 22) on the second carrier foil (28) are separated from one another by a free area (31) of surface which, when the carrier foils are connected, is situated above the strain gauges (6, 9) of the first carrier foil (26) so that the strain gauges (6, 9) are not damaged during balancing of the resistors (19, 20, 21, 22).

6. Weighing cell according to one of the preceding Claims, characterised In that the third balancing resistor consists of two partial resistors (21, 22) disposed in the two supply conductors (11, 12) to the bridge and symmetrically in relation to each other.

7. Weighing cell according to one of the preceding Claims, characterised in that the carrier foils (26, 28) with the strain gagues (6, 7, 8, 9) and the balancing resistors (17, 18, 19, 20, 21, 22) are disposed in the flexure measuring element (2), in an elongated recess (23) therein which is hermetically sealed by a metal foil (24).

8. Weighing cell according to one of the preceding Claims, characterised in that the second carrier foil (28) is at the same time an electrical connecting element between the bridge and its external connection (15, 16).

## Revendications

1. Cellule de pesée électromécanique ayant un corps flexible de mesure et des jauges de contrainte disposées sur un côté de ce dernier et raccordées ensemble en pont ainsi que des résistances de réglage, à savoir, une première résistance de réglage pour le réglage du point zéro du pont, une deuxième résistance de réglage pour la stabilisation du point zéro en cas de température changeante et une troisième résistance de réglage par la compensation en température du signal de mesure du pont dans laquelle les jauges de contrainte et la première résistance de réglage sont disposées ensemble avec leurs points de connexion électrique sur une première feuille porteuse commune, caractérisée en ce que les deuxième et troisième résistances de réglage (19, 20; 21, 22) sont disposées ensemble avec leurs points de raccordement électrique (A, B, C, D, E) sur une deuxième feuille porteuse commune (28), en ce que les points de raccordement (A, B, C, D, E) sont disposés géométriquement sur les première et deuxième feuilles (26; 28) de sorte qu'ils peuvent être raccordés directement les uns avec les autres de manière électriquement conductrice, et en ce que la connexion des deux feuilles porteuses (26, 28) aux points de raccordement est réalisée de telle sorte que les trois résistances de réglage (17 à 22) sont librement accessibles en vue des réglages.

2. Cellule de pesée selon la revendication 1 caractérisée en ce que les deux feuilles porteuses (26, 28) avec les jauges de contrainte (6, 7, 8, 9) et les résistances de réglage (17 à 22) qui y sont agencées sont disposées dans un blindage commun (feuille de métal 24) sur le corps flexible de mesure (2).

3. Cellule de pesée selon la revendication 1 ou 2 caractérisée en ce que les points de raccordement (A, B, C, D, E) des feuilles porteuses (26, 28) se trouvent les uns à côté des autres sur une ligne (27).

4. Cellule de pesée selon la revendication 1, 2 ou 3 caractérisée en ce que la deuxième feuille porteuse (28) recouvre sans contact une partie de la première feuille porteuse (26) et les jauges de contrainte (6, 9) disposées sur cette partie de feuille.

5. Cellule de pesée selon les revendications 1 à 4 caractérisée en ce que les deuxième et troisième résistances de réglage (19, 20, 21, 22) de la deuxième feuille porteuse (28) sont séparées l'une de l'autre par une zone libre (31) de la surface qui, lorsque les feuilles porteuses sont réunies, se trouve au-dessus des jauges de contrainte (6, 9) de la première feuille porteuse (26), de sorte que lors du réglage des résistances (19, 20, 21, 22), les jauges de contrainte (6, 9) ne sont pas endommagées.

6. Cellule de pesée selon l'une des revendications précédentes caractérisée en ce que la troisième résistance de réglage est constituée par deux résistances partielles (21, 22) disposées symétriquement l'une l'autre sur les deux conducteurs d'alimentation (11, 12) du pont.

7. Cellule de pesée selon l'une des revendications précédentes caractérisée en ce que les feuilles porteuses (26, 28) ayant les jauges de contrainte (6, 7, 8, 9) et les résistances de réglage (17, 18, 19, 20, 21, 22) sont disposées dans un évidement allongé (23) du corps flexible de mesure (2) qui est fermé hermétiquement par une feuille métallique (24).

8. Cellule de pesée selon l'une des revendications précédentes caractérisée en ce que la deuxième feuille porteuse (28) est en même temps un élément de raccordement électrique entre le pont et son connecteur extérieur (15, 16).

# Fig.1

0 152 054

# Fig.2

# Fig.3

# Fig.4

# Fig.5